# EUROPEAN PATENT APPLICATION

(11) **EP 0 562 869 A1**
(43) Date of publication of application: **29.09.1993**
(21) Application number: 93302335.0
(22) Date of filing: 25.03.1993
(51) Int. Cl.: H01M 2/10, H01M 2/12

(54) **Battery packs**

(30) Priority: 26.03.1992 GB 9206546
(71) Applicant: Manufacturing Electrical Design Consultants Limited, Pinxton, Nottingham NG16 6JF (GB)
(72) Inventor: Oates, Philip, c/o Manufacturing Electrical Design, Pinxton, Nottingham, NG16 6JF (GB)
(74) Representative: Swindell & Pearson

(57) **Abstract**

A battery pack intended for use in underground workings or oil rigs comprises a holder (12) for a battery of rechargeable cells (14), each of which is provided with a cap (16) defining a sealed space into which gases discharge from the battery during charging can escape, conduit means (18,20) leading from each sealed space connecting the space with the exterior of the holder (12).

## Description

This invention relates to battery packs.

In underground mine workings and oil rigs it is often necessary to use batteries, for example in emergency lights. As re-chargeable batteries can generate flammable gases when being charged they cannot be used in installations the interiors of which are hermetically sealed from their surroundings.

This means that non chargeable cells have to be used, which can be expensive since they have to be discarded when they are flat. Alternatively rechargeable cells have to be removed to a safe area for charging.

It is an object of the invention to obviate and/or mitigate this and other disadvantages of the prior art.

According to one aspect of the invention there is provided a battery pack comprising a holder to hold at least one cell to be charged, the holder being provided with connectors to be connected to the terminals of the, or each, cell; sealing means to seal the, or each, cell and the connectors from the atmosphere; and venting means to vent outside the pack any gases released by the, or each, cell.

Preferably the sealing means comprises an electrically insulative encapsulant to encapsulate the, or each, cell and the connectors. The encapsulant may comprise a silicone elastomer or an epoxy resin.

Preferably the venting means comprises a vent conduit to vent any gases released by the, or each, cell. The preferred embodiment of this invention is suitable for use with cells having vent apertures adjacent one end of each cell. Preferably the venting means includes a cap to be fitted over that end of the, or each, cell. In the preferred embodiment, the, or each, cap is in communication with said vent conduit to vent said released gases. Preferably the, or each, cap is also sealed from the atmosphere by the sealing means.

The holder may be adapted to hold a plurality of cells, in which case a single cap is preferably provided for each cell. A plurality of connecting conduits may extend between the caps for adjacent cells, such that all the caps are connected together by said connecting conduits. Said vent conduit is preferably in communication with the connecting conduits to vent said gases outside the pack. In the preferred embodiment, the vent conduit and the connecting conduits are in the form of pipes.

The holder may be provided with switching means to switch on or off power from the battery pack to an external electrical device. The switching means may be adapted such that the power from the battery pack is switched off before the, or each, cell is removed from, or disposed in, the holder. The switching means may be arranged to engage a lid of an enclosure into which the battery pack is fitted such that when the lid is removed power is switched off. In an alternative arrangement, the battery pack may be adapted to be fixed to a support such that the switching means engages the support, whereby the power is switched on. Preferably, the switching means comprises a plunger movable between a first position to switch on the power and a second position to switch off the power.

Temperature measuring means may be provided to determine the temperature inside the holder during charging. Preferably the temperature measuring means comprises a thermistor. The thermistor may be adapted to vary the charging current to the, or each, cell as the temperature in the holder varies.

The holder may be provided with at least one support member. Where the holder is adapted to hold a plurality of cells the holder is provided with a support member for each, cell.

According to another aspect of the invention, there is provided a method of charging at least one cell of a battery pack comprising disposing the, or each, cell to be charged in a holder, the holder being provided with connectors to be connected to the terminals of the, or each, cell; disposing venting means around the, or each, cell to vent outside the pack any gases released by the cell; sealing the, or each, cell and the connectors from the atmosphere; and thereafter charging the, or each, cell.

Preferably the, or each, cell and the connectors are sealed by encapsulating them with an electrically insulative encapsulant. The encapsulant may comprise a silicone elastomer.

Preferably the venting means comprises a cap to be fitted over one end of the, or each, cell. In the preferred embodiment, the, or each, cap is sealed from the atmosphere. Preferably the, or each, cap is provided with at least one conduit to vent any gases released to the atmosphere.

Preferably a plurality of cells are disposed in the holder.

An embodiment of the invention will now be described by way of example only with reference to the accompanying drawings, in which:-
Fig. 1 is a schematic plan view of a battery pack;
Fig. 2 is a view along the lines II-II in Fig. 1;
Fig. 3 is a schematic plan view showing only the venting means; and
Fig. 4 is a schematic view showing the internal circuitry of the battery pack.

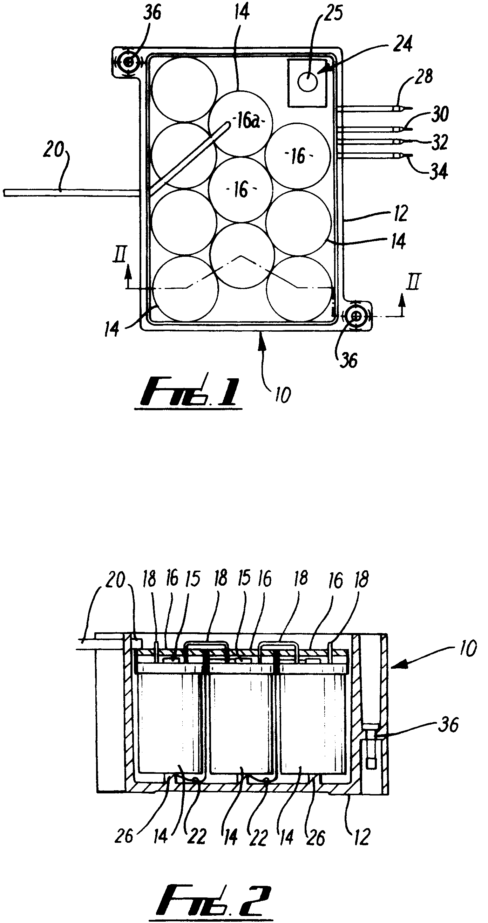

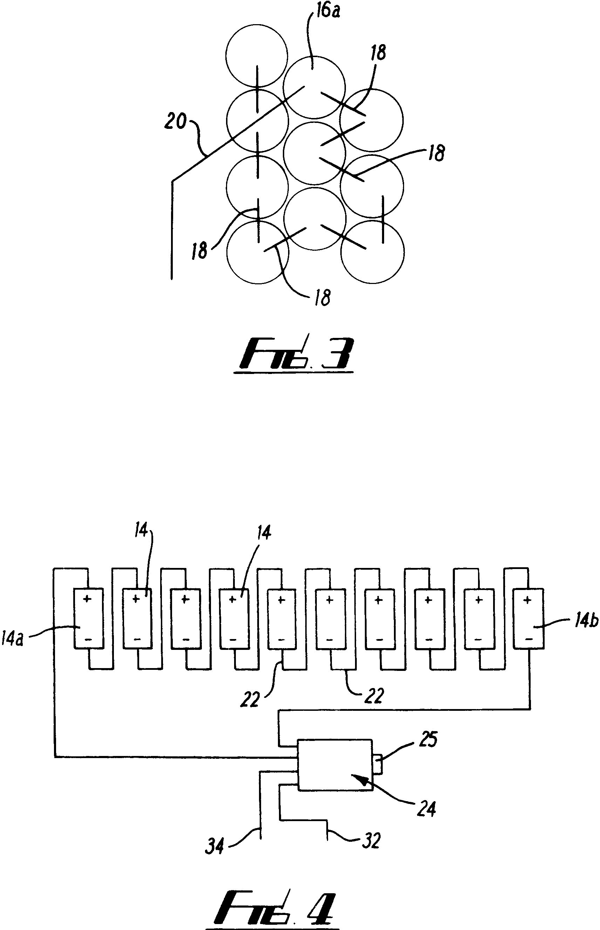

Referring to the drawings, there is shown a battery pack 10, which comprises a holder in the form of a box 12. As shown, the box 12 is of a suitable size and shape to hold ten cells 14. The cells 14 can be nickel-cadmium cells (NiCd), or they may be any other type of rechargeable cells. The holder is also provided with a plurality of supports 26 to support the cells (see Fig. 2). The battery pack 10 is adapted to be connected to a charging circuit (not shown) to charge the cells 14.

The pack 10 is provided with venting means comprising ten caps 16 which are adapted to fit over, and hermetically seal, the tops of the cells 14 and their upper terminals 15. A plurality of connecting conduits 18 (shown in Fig. 2 and schematically in Fig. 3) connect adjacent caps 16 together such that all the cells 14 are connected in series to each other by the connecting conduits 18. In this respect, reference is made to Fig. 3 which shows the preferred interconnection between the cells via the connecting conduits 18. The connecting conduits 18 are formed of a suitable material, for example, silicone tubing. A venting conduit 20 leads from the cap designated 16a at the end of the series connection to the atmosphere outside the box 10.

The purpose of the caps 16 and the conduits 18,20 is to vent gas which may be released when the cells 14 are charged. NiCd cells are provided with a small aperture at the top such that any gas produced during charging will be released to the atmosphere. The caps 16 are arranged such that they fit over the top of the cells so that any gas is released to the inside of the caps. The gas thus released passes along the connecting conduits 18, and thereby to the atmosphere via the venting conduit 20.

The pack 10 is also provided with a temperature sensor in the form of a thermistor (not shown) disposed in the box 12 to measure the temperature in the box 12 and cause the charging current to be varied according to the temperature.

The pack 10 is also provided with electrical connectors 22. Reference in this respect is made to Fig. 4 which shows that the cells 14 are connected together electrically in series, the positive terminal from the cell 14a being connected to the switch 24 and the negative terminal from the cell 14b also being connected to the switch 24.

When the cells 14 have been placed in the holder 12, with the cap 16 and conduits 18,20 arranged in place, an encapsulant (not shown) is poured over the top and between the cells to encapsulate the cells 14 together with the caps 16, the connecting conduits 18 and the portion of the vent conduit 20 which extends inside the box 12. The encapsulant also encapsulates at least the lower portion of the switch 24. The encapsulant is a silicone elastomer, suitably, AMBERSIL RTU 2039 (Registered Trade Mark). When the encapsulant has been poured into the box 12, the box 12 may be placed in an enclosure (not shown) containing other electrical apparatus. A lid (not shown) which may be shared by neighbouring apparatus in the enclosure is then placed over the top and secured in place.

Hold down screws 36 fix the box 12 in place in the enclosure.

Leads 28,30,32,34 extend from the box 12. The leads 28,30 are connected between the thermistor and the charging circuit. The input/output leads 32,34 are connected to a switch 24.

The switch 24 connects the cells 14 to the charging circuit and an external electric device, for example emergency lighting. The switch 24 comprises a plunger 25 movable between a first extended position and a second depressed position. The plunger 25 ran be depressed to the second position by a projection on the lid when the lid is fitted in place. Conversely, when the lid is removed, the plunger 25 moves to the first position.

When the plunger 25 is in the first position, the charging current and power to the emergency lighting is switched off. However, when the plunger 25 is in the second position, power from the charging circuit and from the cells 14 to the emergency lighting is switched on.

When the cells 14 have been placed in the box 12, the encapsulant is poured into the box 12 and the switch 24 is switched on. The leads 28,30 can then be connected to a charger to charge the cells.

Various modifications can be made to the invention without departing from the scope thereof. For example, the box 12 could be adapted to hold a greater or lesser number of cells than ten. Also, the arrangement of the venting means could be varied, such as by providing a plurality of connecting conduits 18 connected to a manifold and thereby to the venting conduit 20.

The box 12 may contain other electrical circuitory to control the charging current.

## Claims

1. A battery pack comprising a holder to hold at least one cell to be charged, the holder being provided with connectors to be connected to the terminals of the, or each, cell characterised in that sealing means is provided to seal the, or each, cell (14) and the connectors (15) from the atmosphere; and venting means (18,20) is provided to vent outside the pack any gases released by the, or each, cell (14).

2. A battery pack as claimed in Claim 1, characterised in that the sealing means (16) comprises an electrically insulative encapsulant to encapsulate the, or each, cell (14) and the connectors (15.

3. A battery pack as claimed in Claim 1 or Claim 2, characterised in that the venting means (12,20) comprises a vent conduit (18) to vent any gases released by the, or each, cell (14) and includes a cap (16) fitted over an end of the, or each, cell (14).

4. A battery pack as claimed in any one of Claims 1 to 3, characterised in that the holder (12) is provided with switching means (24) to switch on or off power from the battery pack (10) to an external electrical device, said switching means being adapted such that the power from the battery pack (10) is switched off before the, or each, cell (14) is removed from, or disposed in, the holder (12).

5. A battery pack as claimed in Claim 4, characterised in that the switching means (24) is arranged to engage a lid of an enclosure (12) into which the battery pack (10) is fitted such that when the lid is removed power is switched off.

6. A battery pack as claimed in Claim 5, characterised in that the switching means (24) comprises a plunger (25) movable between a first position to switch on the power and a second position to switch off the power.

7. A battery pack as claimed in any one of the preceding Claims, characterised in that a thermistor is provided to determine the temperature inside the holder during charging and is adapted to vary the charging current to the, or each, cell as the temperature in the holder varies.

8. A method of charging at least one cell of a battery pack comprising disposing the, or each, cell to be charged in a holder, the holder being provided with connectors to be connected to the terminals of the, or each cell; characterised by disposing venting means around the, or each, cell to vent outside the pack any gases released by the cell; sealing the, or each, cell and the connectors from the atmosphere; and thereafter charging the, or each, cell.

9. A method of charging a battery pack as claimed in Claim 8, characterised in that the, or each, cell (14) and the connectors (15) are sealed by encapsulating them with an electrically insulative encapsulant.

10. A method of charging a battery pack as claimed in Claim 8 or Claim 9, characterised in that the venting means comprises a cap (16) to be fitted over one end of the, or each, cell (14) the, or each, cap is provided with at least one conduit (18) to vent any gases released to the atmosphere.
